# EUROPEAN PATENT APPLICATION

(11) **EP 4 206 021 A1**
(43) Date of publication of application: **05.07.2023**
(21) Application number: 22150250.3
(22) Date of filing: 04.01.2022
(51) Int. Cl.: B60L 1/00, B60H 1/00, B60H 1/32, B60P 3/20, B62D 33/04

(54) **POWER SOURCE ADAPTATION DEVICE FOR A TRANSPORT REFRIGERATION UNIT**

(71) Applicant: Carrier Corporation, Palm Beach Gardens, FL 33418 (US)
(72) Inventor: Zarrabi, Jamal, 76520 Franqueville Saint Pierre (FR)
(74) Representative: Dehns

(57) **Abstract**

A power source adaptation device 20 for configuring a transport refrigeration unit 100 for use in a battery electric vehicle 10 having a battery 12, the transport refrigeration unit 100 comprising a generator port 102 configured to receive power from a generator, and an encoder port 103 configured to receive signals from an encoder operatively connected to a generator; the power source adaptation device 20 comprising: a measurement module 22 configured to measure at least one operating parameter of the battery 12 of the electric vehicle 10; and a signal module 24 configured to generate a signal based on the at least one measured operating parameter of the battery 12 and provide the generated signal to the encoder port 103 of the transport refrigeration unit 100; wherein the generated signal is generated to emulate an encoder signal in order to configure the transport refrigeration unit 100 to receive power from the battery 12 of the electric vehicle 10 through the generator port 102.

## Description

The present invention relates to a power source adaptation device for configuring a transport refrigeration unit for use in a battery electric vehicle.

In conventional transport refrigeration units (TRUs) for vehicles, during a 'road mode' of operation i.e. when the vehicle is driving, the refrigeration unit maintains the temperature conditions of a refrigerated compartment by using power supplied by a generator coupled to the thermal engine (e.g. diesel motor) of the vehicle.

An encoder, operatively connected to the generator, measures operational parameters of the generator and provides these operational parameters in the form of signals to the TRU. These signals are essential for the TRU to be able to receive power from the generator and thus function effectively.

As battery technology improves, battery-powered electric vehicles are becoming more common, but of course battery electric vehicles only comprise a traction battery for providing the power to drive the vehicle and do not contain a thermal engine. Therefore, there is also no generator to power the TRU. In order for a TRU unit to be able to receive power supplied by the battery of an electric vehicle, its hardware and software requires significant updates.

It would thus be advantageous to provide a simple electronic solution for adapting a conventional TRU, which is initially built and/or set up to receive power from a generator coupled to a thermal engine of a vehicle, so that it can be used effectively in a battery electric vehicle. That is, to provide a device for configuring a (typical) TRU to receive power from the battery of a battery electric vehicle.

Viewed from a first aspect, the present invention provides a power source adaptation device for configuring a transport refrigeration unit for use in a battery electric vehicle having a battery, the transport refrigeration unit comprising a generator port configured to receive power from a generator, and an encoder port configured to receive signals from an encoder operatively connected to a generator; the power source adaptation device comprising: a measurement module configured to measure at least one operating parameter of the battery of the electric vehicle; and a signal module configured to generate a signal based on the at least one measured operating parameter of the battery and provide the generated signal to the encoder port of the transport refrigeration unit; wherein the generated signal is generated to emulate an encoder signal in order to configure the transport refrigeration unit to receive power from the battery of the electric vehicle through the generator port.

The power source adaptation device allows a conventional TRU, which is designed to operate using power received from a generator, to operate using power received from a battery and thus be utilised in a battery electric vehicle. This avoids having to modify the hardware and software of these conventional TRUs to make them compatible with battery electric vehicles and/or avoids having to develop completely new versions of TRUs. Particularly, for users who already own transport refrigeration systems comprising the conventional TRUs, but who wish to make the environmentally conscious switch from combustion engine vehicles (or even hybrid vehicles) to battery vehicles (e.g. vehicles without a generator power source), providing such a power source adaptation device allows them to continue to use the conventional TRUs in conjunction with battery vehicles without having to completely replace, or modify components of, the TRU.

Optionally, the battery of the battery electric vehicle is a traction battery for driving the electric vehicle. The battery electric vehicle may only have one battery, which allows the device and TRU to be implemented flexibly into a range of battery electric vehicles. The traction battery of the electric vehicle may be the only power source in the electric vehicle.

Optionally, the power supplied by the battery is DC power. Optionally, the power supplied by the battery has a voltage of between 270 to 800 Vdc.

Optionally, the electric vehicle is a commercial vehicle for transporting goods, for example a light commercial vehicle (LCV). The traction battery may be for providing motive power to the electric vehicle, which may be done in the road mode and/or may be done simultaneously with powering the refrigeration unit in the road mode. The traction battery may be configured to provide power to the electric vehicle over sustained periods of time, such as over a period of up to 5 or 10 hours, or a range of 50 to 300 miles, including cooling of the refrigerated compartment as well as motive power to drive the vehicle.

Optionally, the electric vehicle may comprise an electric vehicle controller. The electric vehicle controller may be a standard fit by the vehicle manufacturer, or may be added to the electric vehicle as a part of adapting it for refrigerated transport.

Optionally, the battery electric vehicle does not comprise an encoder and/or a generator. By removing the need for a generator and/or an encoder, the vehicle can be made completely electric, which is environmentally advantageous.

The transport refrigeration unit comprises a refrigeration circuit with suitable components for providing cooling to the refrigerated compartment. For example, the refrigeration unit may comprise a compression device, a heat rejecting heat exchanger, a heat absorbing heat exchanger, and an expansion device. Optionally, the components of the transport refrigeration unit are integrated into a common housing.

Optionally, the generator port is configured to receive AC power. Optionally, the generator port is configured to receive AC power with a voltage of between 110 to 400 Vac. Optionally the generator port is configured to receive AC power with a frequency of between 30 to 80 Hz. Optionally, the generator port is configured to receive single phase or three phase power.

Optionally, the transport refrigeration unit comprises a grid port configured to draw power from a grid connection.

Optionally, the transport refrigeration unit only comprises two ports, the grid port and the generator port, that are configured to receive power. Generally, older TRUs only have two ports, and allowing for these types of older TRUs to be configured for use in battery electric vehicles is a significant advantage of the power source adaptation device.

Optionally, the power source adaptation device comprises a CAN module configured to control an exchange of data between a CAN bus of the battery electric vehicle and a CAN bus of the transport refrigeration unit.

A CAN (Controller Area Network) bus is commonly used in relation to vehicle systems and advantageously the CAN module may make use of a pre-existing bus connection of the electric vehicle, which once again allows for the refrigeration unit to be easily integrated with a range of electric vehicle designs from different manufacturers without the need for extensive modification to the electric vehicle system or transport refrigeration unit.

Optionally, the CAN module is configured to prevent the transport refrigeration unit from receiving power from the battery of the electric vehicle through the generator port in response to determining a battery fault based on data from the CAN bus of the battery electric vehicle.

Optionally, the CAN module is configured to prevent the transport refrigeration unit from receiving power from the battery of the electric vehicle through the generator port in response to determining a refrigeration unit fault based on the data from the CAN bus of the transport refrigeration unit.

By communicating with the vehicle CAN bus, the power source adaptation device is able to improve the flexibility of the system response to faults in either the TRU or the electric vehicle battery.

Optionally, the CAN module is configured to retrieve a value of the at least one operating parameter of the battery of the electric vehicle from the CAN bus. The obtained value can be used to check the measurement made by the measurement module and/or adjust the signal generated by the signal module.

Optionally, the at least one operating parameter comprises at least one of a voltage of the battery of the electric vehicle and a charge level of the battery of the electric vehicle.

Optionally, the generated signal comprises an alternating signal.

Viewed from a second aspect, the present invention provides transport refrigeration system comprising: a battery electric vehicle comprising a battery; a transport refrigeration unit comprising a generator port configured to receive power from a generator, and an encoder port configured to receive signals from an encoder operatively connected to a generator; and a power source adaptation device according to the first aspect; wherein the battery of the battery electric vehicle is electrically connected to the generator port of the transport refrigeration unit; and wherein the signal module of the power source adaptation device is communicatively connected to the encoder port of the transport refrigeration unit.

Viewed from a third aspect, the present invention provides method of configuring a transport refrigeration unit for use in a battery electric vehicle having a battery, the method comprising: electrically connecting the battery of the battery electric vehicle to a generator port of the transport refrigeration unit, wherein the generator port is configured to receive power from a generator; connecting a power source adaptation device to an encoder port of the transport refrigeration unit, wherein the encoder port is configured to receive signals from an encoder operatively connected to a generator; measuring at least one operating parameter of the battery of the electric vehicle using a measurement module of a power source adaptation device; generating a signal based on the at least one measured operating parameter using a signal module of the power source adaptation device; and providing the generated signal to the encoder port of the transport refrigeration unit; wherein the generated signal is generated to emulate an encoder signal in order to configure the transport refrigeration unit to receive power from the battery of the electric vehicle through the generator port.

Optionally, the method does not include modifying a hardware component of the transport refrigeration unit. By providing a simple device that enables the transport refrigeration unit to be used in an electric vehicle, without any substantive TRU hardware modification, the time and skill required to configure a transport refrigeration unit for use in a battery electric vehicle is reduced.

Optionally, the method comprises: connecting a CAN module of the power source adaptation device to a CAN bus of the battery electric vehicle; monitoring for a battery fault based on data from the CAN bus of the battery electric vehicle; and in response to determining a battery fault, preventing the transport refrigeration unit from receiving power from the battery of the electric vehicle through the generator port.

Optionally, the method comprises: connecting a CAN module of the power source adaptation device to a CAN bus of the transport refrigeration unit; monitoring for a refrigeration unit fault based on data from the CAN bus of the transport refrigeration unit; and in response to determining a refrigeration unit fault, preventing the transport refrigeration unit from receiving power from the battery of the electric vehicle through the generator port.

Certain embodiments of the present disclosure will now be described in greater detail by way of example only and with reference to the accompanying drawings in which:
Figure 1 shows a schematic cross-sectional view of a transport refrigeration unit integrated with a vehicle with a thermal engine;
Figure 2 shows a schematic cross-sectional view of the transport refrigeration unit of Figure 1 integrated with a battery electric vehicle; and
Figure 3 shows a method of configuring a transport refrigeration unit for use in a battery electric vehicle.

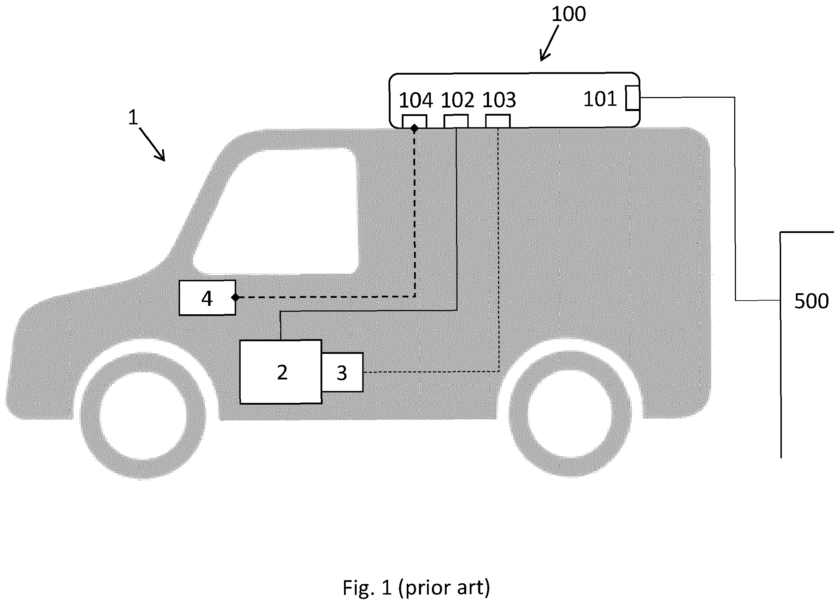

Figure 1 shows a transport refrigeration unit (TRU) 100 in a vehicle 1. Vehicle 1 comprises a thermal engine (e.g. a diesel engine) which is part of the powertrain or drive system of the vehicle 1. Vehicle 1 further comprises a generator 2 which is coupled to the thermal engine and configured to generate electrical power from the thermal engine. An encoder 3 is operatively connected to the generator 2. A controller 4 is configured to control the operation of the vehicle 1 (e.g. while driving).

The vehicle 1 comprises a compartment (not shown) configured to hold cargo, such as, for example perishable goods and environmentally sensitive goods (herein referred to as perishable goods). The perishable goods may include but are not limited to fruits, vegetables, grains, beans, nuts, eggs, dairy, seed, flowers, meat, poultry, fish, ice, blood, pharmaceuticals, or any other suitable cargo requiring cold chain transport.

The TRU 100 is associated with the compartment and configured to control an internal temperature of the cargo compartment. The cargo is maintained at a desired temperature by cooling of the compartment via the TRU 100 that circulates refrigerated airflow into and through the cargo compartment.

The components of the TRU 100 generally include a compressor, an electric compressor motor, a condenser that may be air cooled, a condenser fan assembly, a receiver, a filter dryer, a heat exchanger, an expansion valve, an evaporator, an evaporator fan assembly, a suction modulation valve, and a controller that may include a computer-based processor (e.g., microprocessor). The components of the TRU 100 are generally integrated/sealed into a common housing and the TRU 100 is thus configured be easily mounted onto different vehicles.

The electric compressor motor needs to be provided with electrical power for operation of the TRU 100. Accordingly, the TRU 100 comprises a respective port (e.g. an electrical power port) for connecting to each of the two available power sources: a grid port 101 for connection to an electrical grid 500 (e.g. a mains power source), and a generator port 102 for connection to the generator 2 of the vehicle 1.

The TRU 100 is configured to determine (e.g. via a TRU controller, not shown) if the grid port 101 is connected to the grid 500. If the grid port 101 is connected to the grid 500, and grid power is available, then the TRU 100 is configured to operate in a 'grid mode' of operation (i.e. using the grid 500 to power the components of the TRU 100).

If the TRU 100 determines that grid power is not available (e.g. the grid port 101 is not connected to the grid 500), but determines that generator power is available, then the TRU 100 is configured to operate in a 'road mode' of operation (i.e. when the vehicle 1 is being driven, using the generator 2 to power the components of the TRU 100).

The TRU 100 comprises an encoder port 103 (e.g. a communication port) configured to be connected to the encoder 3. In road mode, in order to operate effectively, utilising the power of the generator 2, it is necessary that the TRU 100 receives encoder signals via the encoder port 103 from the encoder 3, which configure the TRU 100 to be able to receive power from the generator 2 through the generator port 102. Specifically, the frequency of the encoder signals (which are alternating signals) provides an indication of the voltage output of the generator 2, and, in response to the encoder signals, the TRU 100 is configured to receive power at the indicated voltage.

The TRU 100 also comprises a CAN bus port 104 (e.g. a communication port) configured to be connected to the controller 4 of the vehicle 1 via a CAN bus. Conventionally, the TRU 100 is configured to send operational data to the controller 4 of the vehicle 1 via the CAN bus so that a user (e.g. a driver of the vehicle 1) can be alerted of a potential fault with the TRU 100.

A fully battery-powered electric vehicle does not comprise a thermal engine, generator or encoder, and therefore in order for the TRU unit 100 to be implemented therein, it must be able to receive power supplied by a battery of the electric vehicle. A conventional TRU unit 100, as described above in relation to Figure 1, requires significant updates to its hardware and software to make it compatible for use in a battery electric vehicle.

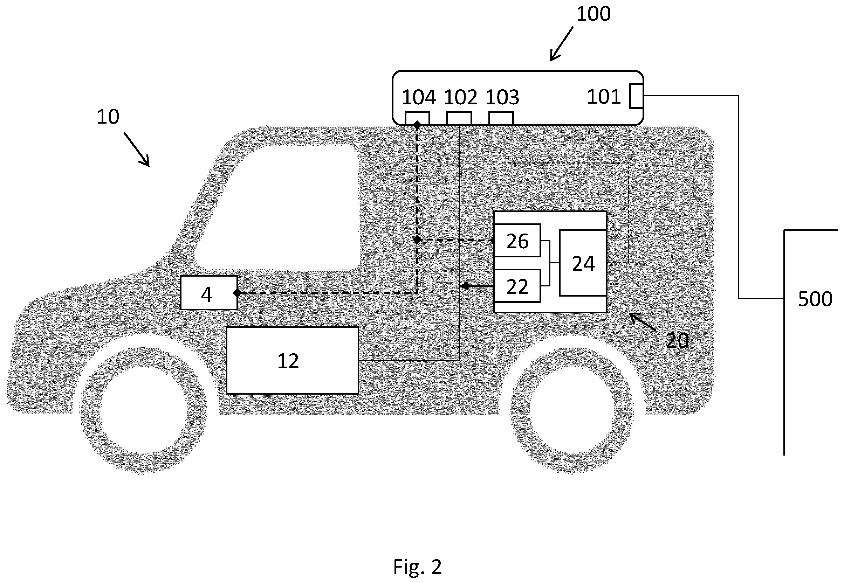

Figure 2 shows a TRU unit 100 integrated with a battery electric vehicle 10. Battery electric vehicle 10 comprises a traction battery 12 that is part of the drive system of the vehicle 10, i.e. configured to drive the vehicle 10. A controller 14 is configured to control the operation of the vehicle 10 (e.g. while driving).

The battery electric vehicle 10 does not comprise a thermal engine, generator or encoder; however, the battery electric vehicle 10 is otherwise similar to vehicle 1.

The TRU unit 100 is identical to the TRU unit 100 shown in Figure 1 - in other words, the hardware and software of the TRU unit 100 has not been modified in order to make it compatible for use in the battery electric vehicle 10.

As shown in Figure 2, there is provided a power source adaptation device 20. The device 20 is for configuring the TRU 100 for use in the battery electric vehicle 10. The device 20 comprises a measurement module 22 which is configured to measure at least one operating parameter of the battery 12 of the electric vehicle 10. In one example, the measurement module 22 is configured to measure a DC voltage of the battery 12.

The device 20 also comprises a signal module 24. The signal module 24 is configured to generate a signal based on the operating parameter(s) of the battery 12 (measured by the measurement module 22), and provide the generated signal to the encoder port 103 of the TRU 100.

The signal module 24 generates the generated signal in such a way to emulate an encoder signal that the encoder port 103 of the TRU 100 is conventionally configured to receive. Thus, when the encoder port 103 receives the generated signal, the TRU 100 is configured to receive power from the battery 12 of the electric vehicle 10 through the generator port 102.

In other words, the signal module 24 is able to generate a signal that looks the same (to the encoder port 103) as an encoder signal, e.g. the generated signal is analogous to an encoder signal.

The generated signal comprises data including the measured operating parameter(s) which enables the TRU 100 to receive DC power from the battery 12 of the electric vehicle 10 through the generator port 102. For example, the signal is generated to be an alternating signal, and the frequency of the generated signal is based on the measured DC voltage (Vdc) of the battery 12. Accordingly, in response to the generated signal, the TRU 100 is configured to receive DC power at the measured voltage level.

In one example, the generated signal comprises five sub-signals in order to effectually imitate/emulate the encoder signal. The five sub-signals include a first pair of differential sub-signals, a second pair of differential sub-signals, and a ground sub-signal (0Vdc). The second pair of differential sub-signals are out of phase with the first pair of differential sub-signals. The peak-to-peak voltage of the first pair and the second pair of differential sub-signals is constant. The measured voltage (Vdc) of the battery 12 is indicated to the TRU 100 by the frequency of the differential sub-signals.

As shown in the example of Figure 2, the device 20 also comprises a CAN module 26. The CAN module 26 is configured to connect to, and communicate through, the CAN bus of the vehicle 10. In this way, the CAN module 26 is able to exchange data bi-directionally with the controller 4 and the TRU 100.

In one example, the CAN module 26 may be able to retrieve a value of the at least one operating parameter from the controller 4 in order to confirm the measurement(s) made by the measurement module 22.

In another example, where a fault develops in the battery 12 of the vehicle 10 (e.g. a battery overload or a battery overheat), then the CAN module 26 can identify that there is a battery fault from data exchange with the CAN bus and prevent the TRU 100 from receiving power from the battery 12 through the generator port 103. The CAN module 26 may perform this by instructing the signal module 22 to stop or modify the generated signal, or by instructing the controller 4 via the CAN bus to stop the battery 12 from supplying power to the TRU 100.

In another example, where a fault develops in the TRU 100, the TRU 100 is (conventionally) configured to send an error signal to the controller 4 via the CAN bus. When implemented in a battery electric vehicle 10 in conjunction with the device 20, the CAN module 26 is able to identify that there is a TRU fault from the data exchange with the CAN bus and prevent the TRU 100 from receiving power from the battery 12 through the generator port 103. The CAN module 26 may perform this by instructing the signal module 22 to stop or modify the generated signal, or by instructing the controller 4 via the CAN bus to stop the battery 12 from supplying power to the TRU 100.

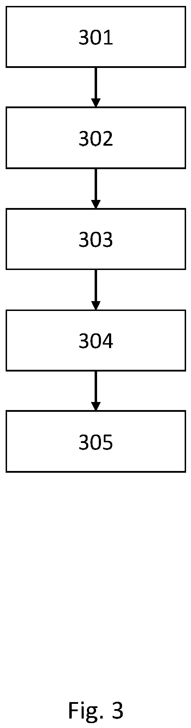

A method 300 of configuring the (conventional) TRU 100 for use in the battery electric vehicle 10 is shown in Figure 3. As mentioned above, the (components of the) TRU 100 are generally integrated/sealed into a common housing and thus, prior to configuration, TRU 100 is mounted onto vehicle 10 and associated with the compartment to be temperature-controlled.

The method 300 of configuring the TRU 100 initially comprises step 301, electrically connecting the battery 12 of the battery electric vehicle 10 to the generator port 102 of the TRU 100, and step 302, connecting the power source adaptation device 20 to the encoder port 103.

Optionally, the method 300 may also comprise a step (not shown) of connecting the CAN module 26 of the power source adaptation device 20 to the CAN bus of the battery electric vehicle 10.

Once the TRU 100 has been connected to the battery 12 and the device 20, it can be operated in a 'road mode' of the electric vehicle 10, i.e. when the vehicle 10 is being driven, using the battery 12 to power the components of the TRU 100.

In step 303 (which takes place during road mode), the measurement module 22 of the device 20 measures at least one operating parameter (e.g. voltage) of the battery 12 of the vehicle 10.

In step 304, the signal module 24 of the device 20 generates a signal based on the at least one measured operating parameter, wherein the generated signal is generated to emulate an encoder signal (i.e. a signal that the conventional TRU 100 would expect to receive when used in a vehicle 1 comprising a generator 2 and encoder 3).

In step 305, the generated signal is provided to the encoder port 103 of the TRU 100, wherein, upon receipt of the generated signal, the TRU 100 is configured to receive power from the battery 12 of the electric vehicle 10 through the generator port 102.

Thus, by providing a power source adaptation device 20, the TRU 100, which is a conventional TRU designed for use in a vehicle 1 comprising a generator 2 and encoder 3, can be utilised with a battery vehicle 10 and receive power from the battery 12 of the vehicle 10 for operation.

## Claims

1. A power source adaptation device for configuring a transport refrigeration unit for use in a battery electric vehicle having a battery, the transport refrigeration unit comprising a generator port configured to receive power from a generator, and an encoder port configured to receive signals from an encoder operatively connected to a generator; the power source adaptation device comprising:
a measurement module configured to measure at least one operating parameter of the battery of the electric vehicle; and
a signal module configured to generate a signal based on the at least one measured operating parameter of the battery and provide the generated signal to the encoder port of the transport refrigeration unit;
wherein the generated signal is generated to emulate an encoder signal in order to configure the transport refrigeration unit to receive power from the battery of the electric vehicle through the generator port.

2. A device as claimed in claim 1, wherein the battery of the battery electric vehicle is a traction battery for driving the electric vehicle.

3. A device as claimed in claim 1 or claim 2, wherein the battery electric vehicle does not comprise an encoder and/or a generator.

4. A device as claimed in any preceding claim, wherein the transport refrigeration unit comprises a grid port configured to draw power from a grid connection.

5. A device as claimed in claim 4, wherein the transport refrigeration unit only comprises two ports, the grid port and the generator port, that are configured to receive power.

6. A device as claimed in any preceding claim, wherein the power source adaptation device comprises a CAN module configured to control an exchange of data between a CAN bus of the battery electric vehicle and a CAN bus of the transport refrigeration unit.

7. A device as claimed in claim 6, wherein the CAN module is configured to prevent the transport refrigeration unit from receiving power from the battery of the electric vehicle through the generator port in response to determining a battery fault based on data from the CAN bus of the battery electric vehicle.

8. A device as claimed in claim 6 or claim 7, wherein the CAN module is configured to prevent the transport refrigeration unit from receiving power from the battery of the electric vehicle through the generator port in response to determining a refrigeration unit fault based on the data from the CAN bus of the transport refrigeration unit.

9. A device as claimed in any preceding claim, wherein the at least one operating parameter comprises at least one of a voltage of the battery of the electric vehicle and a charge level of the battery of the electric vehicle.

10. A device as claimed in any preceding claim, wherein the generated signal comprises an alternating signal.

11. A transport refrigeration system comprising:
a battery electric vehicle comprising a battery;
a transport refrigeration unit comprising a generator port configured to receive power from a generator, and an encoder port configured to receive signals from an encoder operatively connected to a generator; and
a power source adaptation device as claimed in any preceding claim;
wherein the battery of the battery electric vehicle is electrically connected to the generator port of the transport refrigeration unit; and
wherein the signal module of the power source adaptation device is communicatively connected to the encoder port of the transport refrigeration unit.

12. A method of configuring a transport refrigeration unit for use in a battery electric vehicle having a battery, the method comprising:
electrically connecting the battery of the battery electric vehicle to a generator port of the transport refrigeration unit, wherein the generator port is configured to receive power from a generator;
connecting a power source adaptation device to an encoder port of the transport refrigeration unit, wherein the encoder port is configured to receive signals from an encoder operatively connected to a generator;
measuring at least one operating parameter of the battery of the electric vehicle using a measurement module of a power source adaptation device;
generating a signal based on the at least one measured operating parameter using a signal module of the power source adaptation device; and
providing the generated signal to the encoder port of the transport refrigeration unit;
wherein the generated signal is generated to emulate an encoder signal in order to configure the transport refrigeration unit to receive power from the battery of the electric vehicle through the generator port.

13. A method as claimed in claim 12, wherein the method does not include modifying a hardware component of the transport refrigeration unit.

14. A method as claimed in claim 12 or claim 13, wherein the method comprises:
connecting a CAN module of the power source adaptation device to a CAN bus of the battery electric vehicle;
monitoring for a battery fault based on data from the CAN bus of the battery electric vehicle; and
in response to determining a battery fault, preventing the transport refrigeration unit from receiving power from the battery of the electric vehicle through the generator port.

15. A method as claimed in any of claims 12 to 14, wherein the method comprises:
connecting a CAN module of the power source adaptation device to a CAN bus of the transport refrigeration unit;
monitoring for a refrigeration unit fault based on data from the CAN bus of the transport refrigeration unit; and
in response to determining a refrigeration unit fault, preventing the transport refrigeration unit from receiving power from the battery of the electric vehicle through the generator port.
